# EUROPÄISCHE PATENTSCHRIFT

(11) **EP 2 528 234 B1**
(45) Veröffentlichungstag und Bekanntmachung des Hinweises auf die Patenterteilung: **31.07.2013**
(21) Anmeldenummer: 12178810.3
(22) Anmeldetag: 14.05.2008
(51) Int. Cl.: H03K 17/96, H01C 10/10, B25J 13/08, G01L 1/20

(54) **Taktilsensor mit entkoppelten Sensorzellen**
Tactile sensor with independent sensor cells
Capteur tactile comportant des cellules de détection découplées

(30) Priorität: 14.05.2007 DE 102007022871
(43) Veröffentlichungstag der Anmeldung: 28.11.2012
(62) Teilanmeldung aus: 08758638.4
(73) Patentinhaber: Fraunhofer-Gesellschaft zur Förderung der angewandten Forschung e.V., 80686 München (DE)
(72) Erfinder: Fritzsche, Markus, 39114 Magdeburg (DE); Elkmann, Norbert, 39104 Magdeburg (DE)
(74) Vertreter: Pfenning, Meinig & Partner GbR

(56) Entgegenhaltungen:
- DE-A1- 2 514 170
- DE-A1- 3 446 327
- DE-A1- 4 435 829
- DE-A1- 19 750 671
- DE-U1- 20 014 200

## Beschreibung

Gegenstand der Erfindung ist ein Taktilsensor mit mindestens einer Sensorzelle, wobei eine Sensorzelle ein elektrisch leitfähiges Werkstück aus flexiblem Material und eine Verbindung mit einer ersten und einer zweiten Elektrode umfasst, und das flexible Material unter mechanischer Belastung seinen elektrischen Durchgangswiderstand ändert.

Sollen sich Roboter und Menschen einen gemeinsamen Arbeitsraum teilen, d.h., miteinander agieren, so kommt der Absicherung des Roboters eine maßgebliche Bedeutung zu. Der Roboter muss in die Lage versetzt werden, seine Berührungen und Kollisionen mit Menschen und Gegenständen sicher zu erkennen. Hierbei werden Taktilsensoren eingesetzt, um einen Kontakt zwischen einem Roboter und einem Menschen bzw. einem Gegenstand zuverlässig zu detektieren. Des Weiteren kann jedoch jeder beliebige Gegenstand mit einem Taktilsensor versehen werden. So kommen Taktilsensoren auch in anderen Anwendungsgebieten zum Einsatz, z.B. bei der Eingabesteuerung von Maschinen oder in Sensormatten.

Im Stand der Technik existieren verschiedene Lösungsansätze zur Berührung oder Kollisionserkennung, bei dem sich beim Berühren einer Fläche der elektrische Durchgangswiderstand durch die Fläche ändert und somit ein auswertbares Signal generiert wird. So zeigt z.B. die Druckschrift DE 25 14 170 A1 einen Taktilsensor, welcher aus beidseitig kontaktiertem Schaumstoff oder einem antistatischen Fußbodenbelag aufgebaut ist. Die Kontaktierung des Taktilsensors erfolgt mittels flexibler Metallnetze oder Metallgitter. Bei dem Sensor wird eine mechanische Belastung dadurch erfasst, dass sich der Innenwiderstand bzw. der Durchgangswiderstand des kontaktierten ESD-Schaums oder Fußbodenbelags ändert. Eine ortsaufgelöste Erfassung des Krafteintrags ist nicht vorgesehen, der Sensor detektiert ausschließlich eine qualitative Berührung. Mit einem derartigen Sensor können jedoch keine Druckverteilungen gemessen werden.

Die Druckschift DE 200 14 200 U1 beschreibt eine Sensoranordnung mit meheren verteilt angeordneten und matrixförmig zusammen geschalteten Sensorelementen zur Messung der Druckverteilung auf eine Fläche.

Aufgabe der vorliegenden Erfindung ist es, einen Taktilsensor zu schaffen, mit welchem Druckverteilungen gemessen werden können und welcher einen einfachen Aufbau aufweist.

Die Aufgabe wird durch die Merkmale des Anspruchs 1 gelöst.

Dadurch, dass der Taktilsensor mindestens zwei durch einen Zwischenbereich voneinander beabstandete Sensorzellen aufweist, können verschiedene auf den Taktilsensor einwirkende Kräfte voneinander getrennt werden. So kann zwischen einer Kraft, welche auf eine erste Sensorzelle und einer Kraft, welche auf eine zweite Sensorzelle wirkt, unterschieden werden.

Eine einzelne Sensorzelle wird dadurch gebildet, dass ein elektrisch leitfähiges Werkstück aus flexiblem Material vorliegt, wobei das flexible Material unter mechanischen Belastungen seinen elektrischen Durchgangswiderstand ändert, und jeweils mit einer ersten und einer zweiten Elektrode verbunden ist. Dabei ist zwar die Verbindung der Elektroden mit dem elektrisch leitfähigen Werkstück Teil der Sensorzelle, nicht zwangsläufig jedoch die Elektrode an sich.

In dem Zwischenbereich befindet sich zumindest teilweise ein Medium mit einem größeren spezifischen Widerstand als der spezifische Widerstand der elektrisch leitfähigen Werkstücke der entweder ersten oder der zweiten Sensorzelle. Dadurch, dass im Zwischenbereich ein Medium mit dem größeren spezifischen Widerstand vorhanden ist, werden zwei benachbarte Sensorzellen voneinander entkoppelt.

Um einen besonders einfachen Aufbau des Taktilsensors zu gewährleisten, sind zwei benachbarte Sensorzellen mit einer gemeinsamen ersten oder zweiten Elektrode verbunden. Eine Elektrode gemeinsam auszubilden ist möglich, da die gemessene sensorische Veränderung - die Änderung des Durchgangswiderstands im elektrisch leitfähigen Werkstück aus flexiblem Material - nur zwischen den Elektroden möglich ist, mit welchen eine Sensorzelle in Verbindung steht. Die nicht-gemeinsamen Elektroden der zwei benachbarten Sensorzellen sollten zudem voneinander beabstandet ausgeführt werden, d. h. nach Möglichkeit nicht in den Zwischenbereich ragen.

Gemäß der vorab erwähnten Entkoppelung durch das Medium mit einem größeren spezifischen Widerstand im Zwischenbereich, sind im Wesentlichen zwei verschiedene Fälle denkbar. Zum einen können zwei benachbarte Sensorzellen zwei völlig getrennt voneinander ausgeführte elektrisch leitfähige Werkstücke aufweisen. Das Medium im Zwischenbereich könnte hier durch Luft oder destilliertes Wasser gebildet werden, welche beide einen großen spezifischen Widerstand aufweisen. So ist es sehr unwahrscheinlich, dass ein in einer ersten Sensorzelle aufgebrachtes Signal an den beiden Elektroden einer zweiten Sensorzelle gemessen werden kann. Zum anderen können die elektrisch leitfähigen Werkstücke einer ersten und einer zweiten benachbarten Sensorzelle miteinander in Kontakt stehen, solange im Zwischenbereich zumindest teilweise ein Medium mit höherem spezifischem Widerstand vorliegt. Die Verbindung zwischen der ersten und der zweiten Sensorzelle (bzw. den Teilen des elektrisch leitfähigen Werkstücks, welcher von jeweils zwei Elektroden direkt kontaktiert wird und seinen Durchgangswiderstand ändert) wird als hochohmige Brücke ausgebildet.

Eine besonders vorteilhafte Weiterbildung ist es, dass die erste und die zweite Elektrode einer Sensorzelle auf zwei sich gegenüberliegenden Oberflächen der Sensorzelle angebracht sind. Da der Durchgangswiderstand durch das elektrisch leitfähige Werkstück aus flexiblem Material gemessen wird, ist es vorteilhaft, wenn die Ladungsträger im Wesentlichen senkrecht durch das Werkstück fließen können und so senkrecht auf den Elektroden der Sensorzelle auftreffen. Dadurch kann der Durchgangswiderstand im unbelasteten Zustand besonders leicht durch die effektive Querschnittsfläche und Länge (bzw. Dicke) der Sensorzelle berechnet werden.

Eine weitere vorteilhafte Weiterbildung ist es, wenn die ersten Elektroden der Sensorzellen im Wesentlichen in einer ersten Ebene liegen und die zweiten Elektroden der Sensorzellen im Wesentlichen in einer zweiten Ebene liegen und die erste und die zweite Ebene, insbesondere durch die elektrisch leitfähigen Werkstücke aus flexiblem Material, voneinander beabstandet sind. Dadurch, dass die ersten Elektroden auf den Oberflächen der Sensorzellen mit gleicher
Orientierung aufgebracht werden, und analog die zweiten Elektroden, kann der Taktilsensor besonders einfach aufgebaut werden. Bei einem Herstellungsverfahren kann zuerst eine Seite des Taktilsensors mit ersten Elektroden, die jeweils entlang einer Vielzahl von Sensorzellen aufgebracht werden, und danach durch Wenden des Sensors die gegenüberliegenden Oberflächen mit den zweiten Elektroden versehen werden.

Eine besonders vorteilhafte Weiterbildung ist es, wenn die erste und/oder zweite Elektrode aus einem leitfähigen Stoff bestehen. Da Stoff in vielen Formen verarbeitbar ist, stellt dies insbesondere beim späteren Anbringen eines Taktilsensors auf einem Objekt oder einem Roboter eine vorteilhafte Weiterbildung dar, da der Taktilsensor durch die besonders biegsamen Elektroden in nahezu jede beliebige Form gebogen werden kann.

Des Weiteren ist es vorteilhaft, wenn die erste und/oder zweite Elektrode auf die Sensorzelle geklebt und/oder durch einen äußeren Druck aufgepresst ist. Durch das Kleben oder das Pressen wird eine definierte Kontaktfläche zwischen Elektrode und dem elektrisch flexiblen Werkstück der Sensorzelle hergestellt. Dadurch wird ein veränderlicher Übergangswiderstand zwischen Elektrode und elektrisch leitfähigem Werkstück aus flexiblem Material verhindert, so dass im Wesentlichen nur der Durchgangswiderstand durch das elektrisch leitfähige Werkstück einer einzelnen Sensorzelle gemessen wird. Dies ermöglicht eine bessere, insbesondere quantitative, Messung des auswertbaren Signals in einer der Sensorzellen.

Alternativ oder in Kombination mit dem vorhergehenden Merkmal kann die erste und/oder zweite Elektrode auch mittels eines leitfähigen Garnes mit der Sensorzelle verbunden werden. Weiterhin kann die erste und/oder zweite Elektrode auch mit einer Ummantelung vernäht werden, wobei die Ummantelung in direkter Verbindung mit der Sensorzelle steht. Das Merkmal der Ummantelung wird an späterer Stelle genauer ausgeführt.

Eine besonders vorteilhafte Weiterbildung ist es, wenn zwei benachbarte Sensorzellen und der dazwischen liegende Zwischenbereich aus einem gemeinsamen elektrisch leitfähigen Werkstück aus flexiblem Material gebildet sind. Durch die Ausführung zweier benachbarter Sensorzellen mit einem elektrisch leitfähigen Werkstück, welches gemäß dem Anspruch 1 im Zwischenbereich zumindest teilweise ein Medium mit einem höheren spezifischen Widerstand als der des elektrisch leitfähigen Werkstücks aufweist, wird zwischen der ersten und der zweiten benachbarten Sensorzelle ein hochohmiger Zwischenbereich geschaffen. Der Zwischenbereich kann dadurch hochohmig gestaltet werden, indem bestimmte Teile im Zwischenbereich durch Fräsen, Stanzen oder Schneiden aus diesem entfernt werden und das verbliebene Material die Verbindung im Zwischenbereich bildet. Die Verbindung im Zwischenbereich weist dabei in der Ebene des Werkstückes von einer ersten der zwei benachbarten in Richtung der zweiten der zwei benachbarten Zellen blickend eine kleinere Querschnittsfläche als die Querschnittsfläche der ersten und/oder zweiten Sensorzelle auf, wobei die Ebene des Werkstückes im Wesentlichen der xy-Ebene der Ausführungsbeispiele entspricht, und die Blickrichtung demnach die x- oder y-Richtung ist. Entsprechen liegen dann die Querschnittsflächen in der yz- oder der xz-Ebene. Hierdurch wird die oben genannte hochohmige Brücke geschaffen.

Dies ist insbesondere dann vorteilhaft, wenn der Zwischenbereich als Verbindung einen Steg mit kleinerer Querschnittsfläche als die jeweilige Querschnittsfläche der zwei benachbarten Sensorzellen umfasst, wobei der Durchgangswiderstand durch den Steg größer ist, als der Durchgangswiderstand des elektrisch leitfähigen Werkstücks zwischen der ersten und zweiten Elektrode jeweils einer der zwei benachbarten Sensorzellen. Auf diese Weise ist der Durchgangswiderstand des gemeinsamen elektrisch leitfähigen Werkstücks im Zwischenbereich größer als der zu überwindende Widerstand zwischen der ersten und zweiten Elektrode einer der Sensorzellen. Dadurch wird die Wahrscheinlichkeit, dass zwischen den zwei Elektroden der zweiten Sensorzelle ein Signal gemessen werden kann, welches im elektrisch leitfähigen Werkstück des Bereichs der ersten Sensorzelle generiert wurde. Diese Weiterbildung ist insbesondere dann vorteilhaft, wenn alle Sensorzellen ein gemeinsames elektrisches Werkstück aus flexiblem Material aufweisen. Dieses kann besonders einfach durch Stanzen, Fräsen oder Schneiden hergestellt werden. Dabei kann ein großes Werkstück aus dem flexiblen Material innerhalb eines Arbeitsschrittes durch Stanzungen in eine Vielzahl von einzelnen Sensorzellen unterteilt werden, wobei die einzelnen Sensorzellen jeweils durch hochohmige Stege oder andere hochohmige Verbindungen voneinander beab-standet sind.

Durch eine Anpassung der Querschnittsfläche der Verbindung im Zwischenbereich kann unter anderem auch die Ortsauflösung des Sensors beeinflusst werden, da eine geringere Querschnittsfläche (im Vergleich zur Querschnittsfläche des Sensors) eine geringere, senkrecht zur Querschnittsfläche stehende, Länge der Verbindung des Zwischenbereichs voraussetzt, um eine zufrieden stellende Entkoppelung der zwei benachbarten Sensorzellen zu erreichen.

An dieser Stelle sei daraufhin gewiesen, dass die Sensorzellen und/oder die Verbindungen alle eine einheitliche Größe aufweisen können (hierdurch wird eine einheitliche Ortsauflösung des Taktilsensors erreicht), jedoch die Sensorzellen und/oder die Verbindungen auch unterschiedliche Größen aufweisen können, wodurch die Ortsauflösung des Taktilsensors variiert. Hierdurch kann der Taktilsensor Bereiche erhöhter und geringerer Ortsauflösung aufweisen, was in verschiedenen Anwendungen bei beispielsweise Robotersystemen vorteilhaft ist. So kann ein Taktilsensor in Bereichen in welchen eine bessere Kenntnis über die anliegenden Drücke von Nöten ist, eine höhere Ortsauflösung besitzen.

Eine besonders vorteilhafte Weiterbildung des erfindungsgemäßen Taktilsensors ist es, dass dieser ein Sensorzellengitter mit mindestens vier Sensorzellen aufweist. Dadurch kann mit einer minimalen Anzahl von Elektroden eine maximale Anzahl an Sensorzellen gleichzeitig kontaktiert werden. So können beispielsweise beim Vorhandensein von n² Sensorzellen, welche jeweils in n Reihen und n Spalten entlang der Gittervektoren angeordnet sind, mit 2n Elektroden vollständig und unabhängig voneinander abgegriffen werden, wobei die ersten Elektroden in Richtung des ersten Gittervektors und die zweiten Elektroden in Richtung des zweiten Gittervektors verlaufen. Die Gittervektoren können dabei in verschiedenen Winkeln zueinander stehen, insbesondere können verschiedene Abschnitte des Sensorzellengitters unterschiedliche Gittervektoren aufweisen. So kann der Taktilsensor an verschiedene Geometrien angepasst werden.

Eine weitere vorteilhafte Weiterbildung ist es, wenn das flexible Material ein elektrisch leitfähiger Schaumstoff ist. Elektrisch leitfähiger Schaumstoff reagiert bei mechanischer Belastung mit einer Verringerung seines Durchgangswiderstands. Zudem kann Schaumstoff besonders leicht bearbeitet werden, so dass Stanzen, Schneiden oder Fräsen mit einfachen Herstellungsverfahren möglich ist. Durch Erhöhen der Schaumstoffdicke kann der Sensor zusätzlich mit stoßdämpfenden Eigenschaften ausgestattet werden. Zu-gleich kann dadurch die Kraftauflösung der Sensorzellen erhöht werden. Durch die Verwendung weicherer oder härterer Schaumstoffe kann die Empfindlichkeit bzw. der Kraftmessbereich der Sensorzellen variiert werden. Die Härte hat zudem Einfluss auf die Robustheit des Sensors. Die einzelnen Sensorzellen aus Schaumstoff können besonders leicht in ihrer Größe variiert werden, was eine vorteilhafte Auswirkung auf die Möglichkeiten der beabsichtigten Kraftauflösung der einzelnen Zellen hat.

Eine erfindungsgemäße Auführung beinhaltet, dass die Sensorzellen eine Ummantelung aufweisen. Durch eine Ummantelung wird der Taktilsensor gegenüber externen Umwelteinflüssen geschützt. Dies hat vorteilhafte Auswirkungen auf die Lebensdauer und die Einsatzgebiete des Taktilsensors. So ist es beispielsweise denkbar mit Hilfe einer Folie einen Taktilsensor zu schaffen, welcher wasserdicht ausgebildet ist und unter feuchten Bedingungen reibungslos funktioniert. Es kann jedoch auch ein atmungsaktives oder luftdurchlässiges Hüllmaterial gewählt werden, so dass der Sensor aufgrund der in den Zwischenbereichen vorhandenen Luft luftdurchlässig gestaltet werden. Dabei können, insbesondere in den Zwischenbereichen, zusätzlich Nähte in der Ummantelung eingebracht werden, was eine zusätzliche Beabstandung der verschiedenen Sensorzellen voneinander gewährleistet. Des Weiteren werden die Elektroden durch die Ummantelung auf das mindestens eine elektrisch leitfähige Werkstück des Taktilsensors aufgepresst.

Eine weitere vorteilhafte Weiterbildung ist es, dass die mit den Sensorzellen verbundenen Elektroden mit einer Auswerteeinheit verbunden sind. Durch die Auswerteeinheit können auf einfache Art und Weise, mit Hilfe einer geeigneten elektronischen Schaltung die Widerstände der einzelnen Sensorzellen gemessen und Veränderungen des Widerstandes erfasst werden. Aus den Messwerten lässt sich eine Widerstandskarte erstellen, aus welcher sowohl Ort als auch Stärke der Krafteinwirkung auf den Sensor ausgelesen werden können. Dies ist insbesondere dann vorteilhaft, wenn die Widerstandsmessungen mit Hilfe einer Multiplexerschaltung erfolgt. Mit deren Hilfe wird jeweils eine Zelle ausgewählt und mit einem externen Widerstand in einem Spannungsteiler verschaltet. So wird vorteilhafterweise eine für jede Zelle widerstandsproportionale Spannung erfasst und mit einem geeigneten Datenauswerteverfahren ausgewertet. Weiterhin kann die Auswerteeinheit A/D Wandler aufweisen. Durch diese Automation der Auswertung, kann der Sensor insbesondere im Bereich der Robotik oder Automatisierungstechnik kostengünstig eingesetzt werden.

Eine Leiterbahn zwischen der Auswerteeinheit und der mit den Sensorzellen verbundenen Elektroden kann zum einen mittels Drahts oder mittels eines leitfähigen Garns gebildet werden. Bei der Verwendung eines leitfähigen Garns wird jeweils mindestens eine Elektrode, vorzugsweise mindestens eine Elektrode aus einer leitfähigen Stoffbahn, mit einem Stück des Garns verbunden und das Garn zur Auswertungseinheit geführt. Die Führung erfolgt derart, dass sich die jeweils verschiedenen Elektroden zugeordneten Garnstücke nicht berühren. Die Führung kann beispielsweise durch Versticken des Garnes auf einem Träger, vorteilhafterweise auf einem textilen Träger, erreicht werden. Hierdurch wird die Flexibilität des Taktilsensors erhöht, da im Bereich der Sensorzellen keine Drähte zum Verbinden des Taktilsensors mit der Auswerteeinheit notwendig sind. Zur Verbindung des Garns mit der Auswerteeinheit können die Enden der einzelnen Garnstücke, welche verschiedenen Elektroden zugeordnet sind, mit jeweils einer Steckhülse versehen werden. Der Träger kann beispielsweise ein abstehender Teil einer Ummantelung oder ein Textilstück, auf welchem auch die Sensorzellen angeordnet sind, sein.

Die unterschiedlichen Ausführungsformen des oben beschriebenen Taktilsensors können miteinander kombiniert werden.

Die unterschiedlichen Ausführungsformen können in einer Vielzahl von Anwendungen verwendet werden.

Eine Anwendung ist ein Sicherheitssystem, welches druckempfindlich ist. Der Taktilsensor kann im Sicherheitssystem als Kollisionsüberwachungssensor oder als Berührungssensor eingesetzt werden, oder als Schaltmatte auf einer Unterlage liegend den Ort und die Bewegung eines sich auf der Schaltmatte befindlichen Objektes vermessen und auswerten, und gegebenenfalls einen Alarm auslösen.

In Form eines Berührungssensor kann der Taktilsensor beispielsweise einem Robotersystem zugeordnet sein und bestimmten Elementen des Robotersystem, wie z.B. einem Greifelement als berührungsempfindliche, künstliche Haut dienen. Hierdurch bekommt das Robotersystem Rückkopplung über seine Interaktion mit der Umwelt, kann andere Objekte somit druckempfindlich wahrnehmen.

Eine weitere Anwendung ist die Verwendung des Taktilsensor als ein taktiles Eingabe- und/oder Kontrollgerät. Der Taktilsensor kann als ein Eingabegerät, beispielsweise eine Tastatur, für ein mobiles Datenverarbeitungsgerät, wie Mobiltelefon, Musikabspielgeräte oder Computer, verwendet werden, wobei die Anzahl der Tasten von einer einfachen Zifferntastatur mit weniger als zehn Tasten bis zu einer großen PC-Tastatur mit mehr als hundert Tasten reichen kann. Jedoch kann der Taktilsensor auch als allgemeines druckempfindliches Eingabegerät mit einem mobilen Datenverarbeitungsgerät verwendet werden. Weiterhin kann zur Bedienung eines Robotersystems ein Griff mit einem Taktilsensor versehen sein, wobei die an unterschiedlichen Orten des Griffes aufgebrachten Drücke in unterschiedliche Bewegungen von zumindest Teilen des Robotersystems umgesetzt werden. Die Drücke können dabei mit mindestens einer Hand und/oder einem Fuß und/oder einem weiteren Robotersystem aufgebracht werden. Des Weiteren ist es möglich das Eingabegerät in Form eines Handschuhs zu schaffen, so dass die aufgrund der Handbewegungen im Handschuh aufgebrachten Drücke direkt an das Robotersystem übertragen werden.

Weitere Vorteile sind in den nebengeordneten Ansprüchen offenbart.

Der erfindungsgemäße Taktilsensor soll anhand von einigen Ausführungsbeispielen weitergehend erläutert werden. Es zeigen:
- Fign. 1a bis 1c: erste erfindungsgemäße Variante des Taktilsensors,
- Fign. 2a bis 2c: zweite erfindungsgemäße Variante des Taktilsensors,
- Fign. 3a bis 3c: Wirkungsweise der zweiten Variante des Taktilsensors,
- Fig. 4: Taktilsensor mit Auswerteeinheit,
- Fign. 5a und 5b: erfindungsgemäßer Taktilsensor mit Ummantelung.

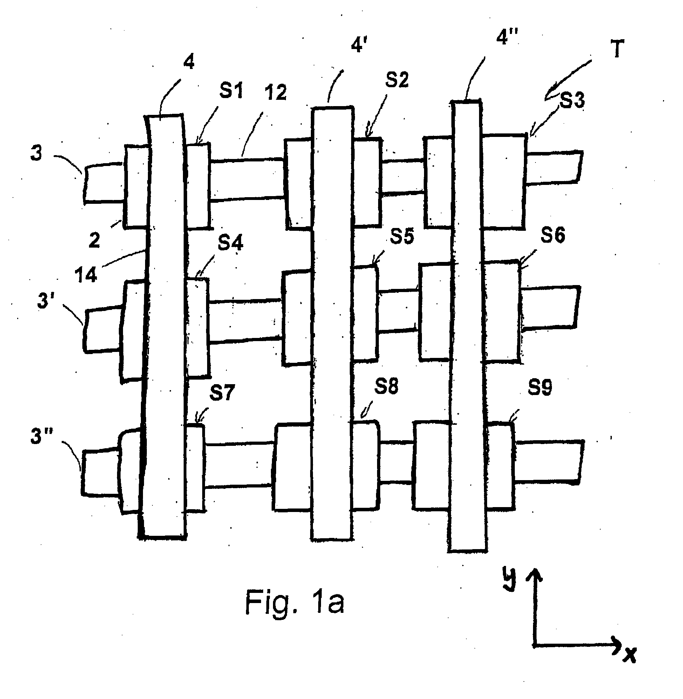

In Fig. 1a wird ein Taktilsensor T mit neun voneinander beabstandeten Sensorzellen S1 bis S9 gezeigt. Dabei besteht eine einzelne Sensorzelle aus einem elektrisch leitfähigen Werkstück aus flexiblem Material, welches hier ein elektrisch leitfähiger Schaumstoff 2 ist. Unterhalb der Sensorzellen S1 bis S3 verläuft eine elektrisch leitfähige Stoffbahn 3, welche die drei Sensorzellen miteinander verbindet. Analog dazu verbindet die elektrisch leitfähige Stoffbahn 3' die Sensorzellen S4 bis S6 und die elektrisch leitfähige Stoffbahn 3" die Sensorzellen S7 bis S9. Auf den Sensorzellen, S1, S4, S7 läuft in Bildrichtung von oben nach unten eine elektrische Stoffbahn 4. Analog dazu verläuft über die Sensorzellen S2, S5, S8 die elektrisch leitfähige Stoffbahn 4' und die elektrisch leitfähige Stoffbahn 4" über die Sensorzellen S3, 56 und S9.

Die elektrisch leitfähigen Stoffbahnen 3, 3', 3" und 4, 4', 4" sind mit dem Schaumstoff 2 der jeweiligen Sensorzellen S1 bis S9 verklebt. Durch das Verkleben entsteht eine feste Kontaktfläche, welche sich auch bei einer Druckbelastung einer einzelnen Sensorzelle in ihrer Größe nicht verändert und von daher keinen veränderlichen Übergangswiderstand zeigt.

Die elektrisch leitfähigen Stoffbahnen bilden die Elektroden der Sensorzellen S1 bis S9. Es ist leicht erkennbar, dass eine einzelne Sensorzelle S1 bis S9 mit seinem Nachbarn jeweils nur eine Elektrode gemeinsam hat. So hat beispielsweise die Sensorzelle S1 mit der Nachbarsensorzelle S2 die elektrisch leitfähige Stoffbahn 3, mit der Nachbarsensorzelle S4 die elektrisch leitfähige Stoffbahn 4 gemeinsam. Die Sensorzelle S5 ist keine der Sensorzelle S1 benachbarte Sensorzelle, da diese keine gemeinsamen Elektroden aufweisen. Die einzelnen Sensorzellen sind mit ihrem direkten Nachbarn ausschließlich über eine Elektrode miteinander verbunden.

Der elektrisch leitfähige Schaumstoff 2 der Sensorselle S1 und der elektrisch leitfähige Schaumstoff der Sensorzelle S2 sind durch einen Zwischenbereich 12 voneinander getrennt. In dem Zwischenbereich befindet sich Luft, welches einen größeren spezifischen Widerstand als der elektrisch leitfähige Schaumstoff 2 besitzt. Durch die vollständige Trennung der elektrisch leitfähigen Schaumstoffe 2 der einzelnen Sensorzellen, kann ein in einer Sensorzelle aufgebrachter Krafteintrag nicht zu einem Signal zwischen den Elektroden einer benachbarten Sensorzelle führen. Dabei ist für die Breite des Zwischenbereichs 12 zwischen der Sensorzelle S1 und der Sensorzelle S2 nur entscheidend, dass selbst im voll belasteten Zustand die einzelnen Schaumstoffstücke der Sensorzellen sich nicht berühren, um so einen etwaigen Kontaktflächeneffekt zwischen den Sensorzellen S2 und S1 zu vermeiden. Dadurch, dass der Zwischenbereich zwischen den einzelnen Sensorzellen nicht groß sein muss, existiert zwischen zwei Sensorzellen nur ein geringer Bereich, in welchem kein Krafteintrag registriert werden kann. Durch den geringen Abstand kommt es also zu einer guten Ortsauflösung des Taktilsensors T, wobei zwischen Signalen innerhalb der einzelnen Sensorzellen klar unterschieden werden kann und nur wenige Bereiche existieren in denen kein Signal registriert werden kann. Es findet also eine sensorische Entkopplung der einzelnen Sensorzellen statt.

Wird beispielsweise in der Sensorzelle S1 eine mechanische Belastung aufgebracht, so kann mit einer später zu diskutierenden Auswerteeinheit eine Spannungs- bzw. Stromänderung gemessen werden, wenn der Stromkreis über die Elektroden 3 und 4 geschlossen wird. Unter der Annahme, dass es zu keinem Krafteintrag in der Sensorzelle S2 kommt, wird auch über einen geschlossenen Stromkreis mit den Elektroden 3 und 4', trotz eines Krafteintrages in der Sensorzelle S1, keine Änderung der Spannung bzw. des Stroms angezeigt werden.

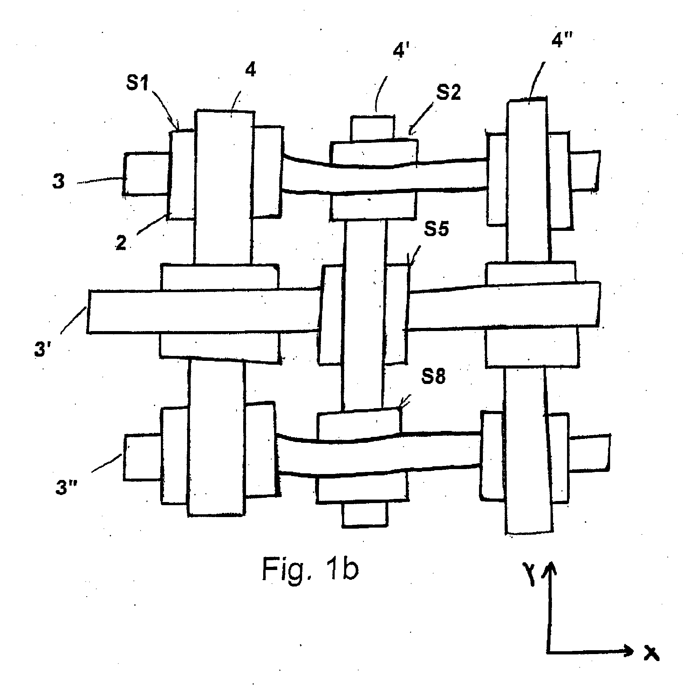

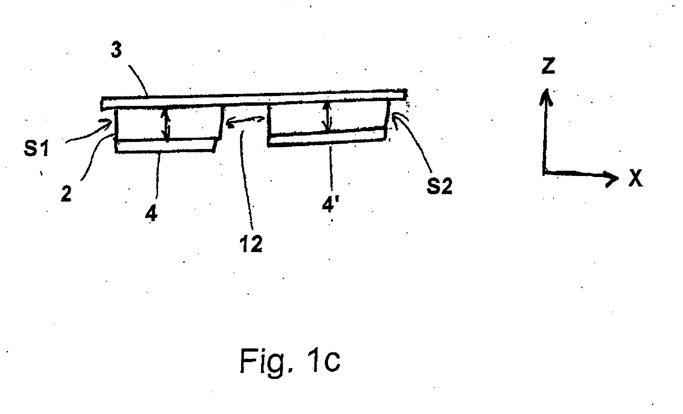

In der Fig. 1 überdecken die Stoffstreifen 3, 3', 3" und 4, 4', 4" nicht die gesamte Ober- bzw. Unterseite des elektrisch leitfähigen Schaumstoffs 2. Die Größe der einzelnen Sensorzelle wird durch die Größe des elektrisch leitfähigen Schaumstoffs 2 der einzelnen Sensorzellen S1 bis S9 festgelegt. Wie später noch gezeigt werden wird sind die Elektroden besonders vorteilhaft aufgebracht, wenn diese die gesamte Ober- bzw. Unterseite des elektrisch leitfähigen Schaumstoffs der Sensorzelle S1 bis S9 überdecken. Als Material für den elektrisch leitfähigen Stoff ist beispielsweise Kupfer-Nylon geeignet. Dennoch sind auch weitere Materialien für die Elektroden denkbar. Auch können die Elektroden anstatt aufgeklebt auf den elektrisch leitfähigen Schaumstoff aufgepresst werden. Dadurch, dass die Elektroden auf die Schaumstoffe aufgepresst bzw. aufgeklebt werden, entsteht eine zusammenhängende Sensormatte, welche insbesondere in den Zwischenbereichen eine hohe Flexibilität aufgrund der dünnen Ausführung der elektrisch leitfähigen Stoffbahnen besitzt.

In der Fig. 1b ist eine alternative Aufbringung der Elektroden 3, 3', 3" und 4, 4', 4" gezeigt. Dabei werden die elektrisch leitfähigen Schaumstoffe 2 der Sensorzellen S1 bis S9 mit den Stoffbahnen 3, 3', 3"und 4, 4', 4" "verwebt". Dies bedeutet, dass die Stoffbahn 4 die Oberseite der Sensorzelle S1, die Unterseite der Sensorzelle S4, und wieder die Oberseite der Sensorzelle S7 kontaktiert und mit dieser verbunden ist. Die elektrisch leitfähige Stoffbahn 4' bildet ein dazu komplementäres Muster, indem es die Unterseite der Sensorzelle S2, die Oberseite der Sensorzelle S5 und wiederum die Unterseite der Sensorzelle S8 verbindet. Die Stoffbahnen 3 und 3' werden jetzt so aufgetragen, dass die jeweils noch nicht kontaktierte den Elektroden 4 bzw. 4' gegenüberliegende Ober- bzw. Unterseite der einzelnen Sensorzellen kontaktiert wird. Obwohl eine derartige Konstruktion des Taktilsensors wesentlich komplizierter als die in Fig. 1a gezeigte Form darstellt, so können doch einige Vorteile erreicht werden. So werden, insbesondere bei teilweise elektrisch leitfähigen Stoffbahnen 3, 3', 3" und 4, 4', 4", welche sich über die gesamte Ober- bzw. Unterseite einer Sensorzelle S1 erstrecken, zwei benachbarte Sensorzellen durch die in diesen Bereichen nichtleitenden Stoffbahnen daran gehindert miteinander eine Kontaktfläche und dementsprechend einen Übergangswiderstand zu bilden. Bei Stoffbahnen, welche über ihre gesamten Ausmaße leitend ausgebildet sind, sollten diese steif ausgebildet werden um keinen direkten leitenden Kontakt zwischen zwei benachbarten Sensorzellen zu ermöglichen.

In Fig. 1c soll nochmals auf die Entkopplung zwischen zwei benachbarten Sensorzellen eingegangen werden. Zu sehen ist ein Schnitt durch den in der Fig. 1 gezeigten Taktilsensor T. Dabei sind in der X-Z-Ebene die Elektrode 3 die Sensorzellen S1 und S2 sowie die damit verbundenen Elektroden 4 und 4' gezeigt. Wird an den Elektroden 3 und 4 eine Spannung angelegt, fließt in der Richtung des Doppelpfeils innerhalb des Schaumstoffs 2 ein Strom durch die Sensorzelle S1. Dabei kann der elektrisch leitfähige Schaumstoff 2 in einem Schaltungsersatzbild als ein Widerstand eingezeichnet werden. Der Widerstand berechnet sich durch die in Z-Richtung gegebene Dicke des Schaumstoffs 2, durch die quer zum Doppelpfeil gelegene Querschnittsfläche der Sensorzelle S1 und den spezifischen Widerstand des Schaumstoffs 2. Dabei ist der Widerstand umso kleiner je dünner der Sensor bzw. je größer die in X-Y-Richtung gesehenen Querschnittsfläche des elektrisch leitfähigen Schaumstoffs 2 sind. Im Zwischenbereich bestimmt sich der Widerstand durch die Querschnittsfläche in der Y-Z-Richtung, durch den Abstand zwischen der rechten Begrenzung der Sensorzelle S1 und der linken Begrenzung der Sensorzelle S2 in X-Richtung und den spezifischen Widerstand des Mediums im Zwischenbereich.

In den Fign. 1a, b, c ist im Zwischenbereich Luft vorhanden, welches einen höheren spezifischen Widerstand als der elektrisch leitfähige Schaumstoff aufweist. Dabei geht in den Fign. 1a bis c der Widerstand im Zwischenbereich im Wesentlichen gegen ∞.

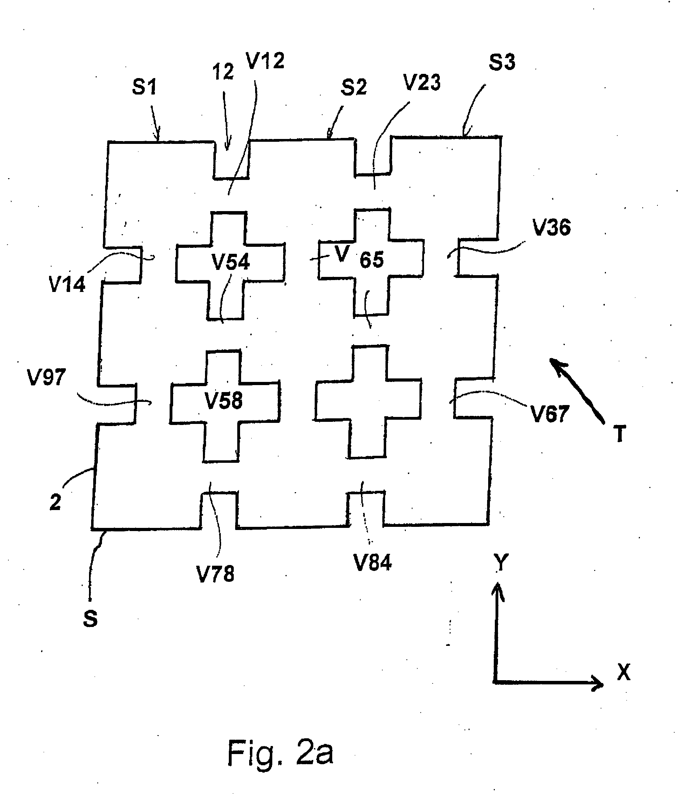

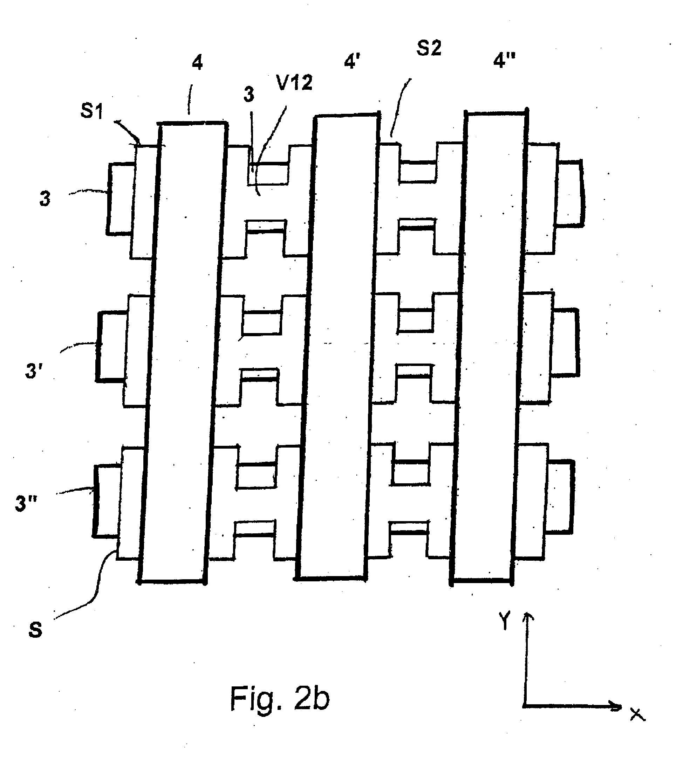

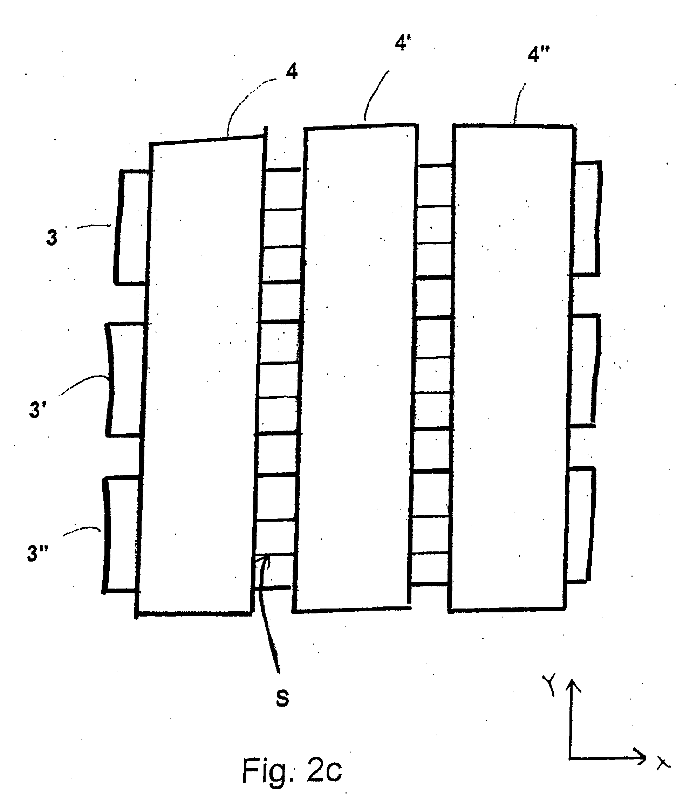

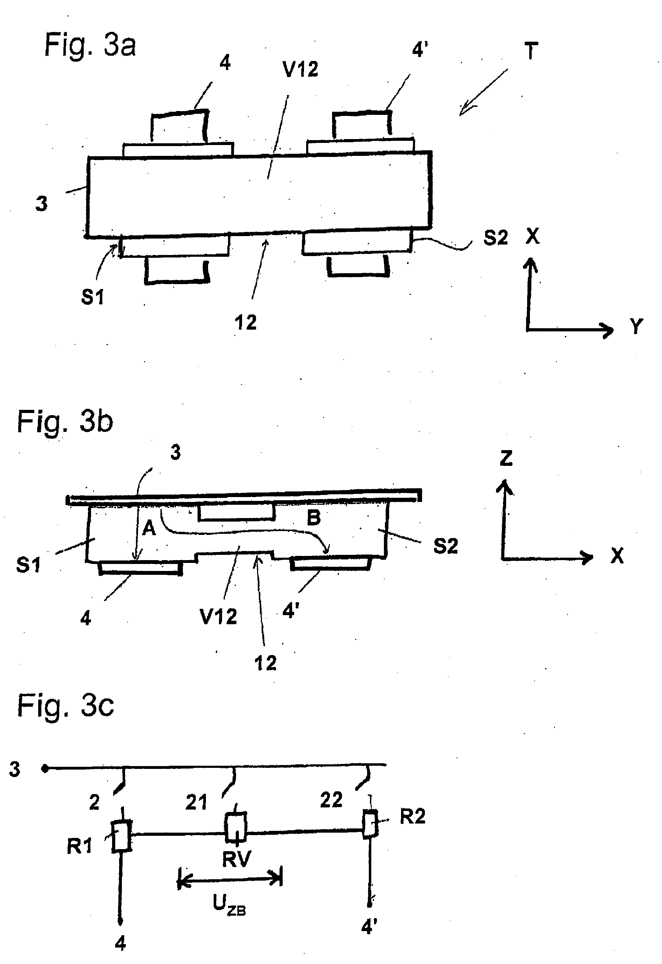

In den Fign. 2a, 2b und 2c ist eine zweite alternative Ausführungsform des Taktilsensors T gezeigt. In der Fig. 2a wird im Wesentlichen eine einzige Sensormatte S gezeigt, welche aus neun Sensorzellen S1 bis S9 besteht, wobei die Sensorzellen mit einer jeweils benachbarten Sensorzelle im Zwischenbereich durch einen Stege V (V12, V13, V14, V25, V36, V45, V56, V47, V58, V69, V78 und V89) gegeben sind. Das Werkstück S ist wieder aus einem leitfähigen elektrischen Schaumstoff 2 gefertigt. Die Besonderheit an den Stegen V liegt darin, dass diese nicht den gesamten Zwischenbereich ausfüllen. Dies soll am Beispiel des Steges V12 erläutert werden. Die rechte in Y- und Z-Richtung verlaufende Grenzfläche der Sensorzelle S1 bzw. die linke in Y- und Z-Richtung verlaufende Grenzfläche der Sensorzelle S2 wird in einem gewissen Teilbereich durch den Steg V12 verbunden, wobei dieser eine quer zur X-Richtung betrachtete kleinere Querschnittsfläche als die rechte bzw. linke Grenzfläche der Sensorzellen S1 bzw. S2 aufweist. Durch die geringere Querschnittsfläche des Steges V12 ist der Durchgangswiderstand durch den Steg V12 in X-Richtung größer als in einer parallel dazu verlaufenden Ebene der Sensorzelle S1 bzw. S2. Zudem ist der Durchgangswiderstand in den Sensorzellen S1 und S2 in Z-Richtung (aufgrund entsprechender Dicke des Schaumstoffs 2 in Z-Rich-tung) ebenfalls geringer als der Durchgangswiderstand im Steg V12 in X-Richtung. Dadurch können die Sensorzellen sehr nahe zueinander, d.h. mit einem in
X-Richtung nur sehr schmalen Zwischenbereich 12 (bzw. in den anderen Zwischenbereichen in X-und in
Y-Richtung) ausgebildet werden, wenn nur die quer zum Abstand der jeweils benachbarten Sensorzellen verlaufende Querschnittsfläche der Stege V klein genug ausfällt. Auf die genaue Wirkungsweise wird in den Fign. 3a bis 3c eingegangen. Ein großer Vorteil des in Fig. 2a gezeigten Taktilsensors T liegt darin, dass eine große zusammenhängende Schaumstoffmatte durch Stanzungen zu einer Sensormatte verarbeitet werden kann, welche eine gute Ortsauflösung und Entkopplung der Sensorzellen voneinander besitzt.

In der Fig. 2b ist die Sensormatte S mit den aufgebrachten elektrisch leitfähigen Stoffbahnen 3, 3', 3" und 4, 4', 4" aufgebracht, wie bereits in den Fign. 1a und 1c gezeigt.

Im Zwischenbereich 12 ist zu sehen, dass der Steg V12 durch die Stoffbahn 3 komplett überdeckt wird, jedoch nicht von den Stoffbahnen 4 bzw. 4' berührt wird. Um eine in der Sensorzelle S1 aufgebrachte Belastung in der Sensorzelle S2 zu messen, muss als elektrische Leiterbahn ein Weg von der Elektrode 3 durch die Sensorzelle S1 und den hochohmigen Steg V12 und anschließend in der Sensorzelle 2 in die Elektrode 4' gefunden werden, welches jedoch aufgrund der Hochohmigkeit des Steges aufgrund der geringen Querschnittsfläche nahezu unmöglich ist.

In der Fig. 2c ist nochmals die Sensormatte S der Fig. 2a dargestellt, diesmal jedoch mit elektrisch leitfähigen Stoffbahnen 3, 3', 3" und 4, 4', 4", welche jeweils die Ober- und Unterseite der einzelnen Sensorzellen S1 bis S9 vollständig überdecken. Die durch die Stoffbahnen abgedeckte Oberfläche der einzelnen Sensorzellen, entscheidet mit darüber, wie stark der Widerstandsabfall bzw. -anstieg aufgrund einer aufgebrachten Kraft ist bzw. wie sensibel ein einzelner Sensor der Sensormatte messen kann.

In den Fign. 3a und 3b soll genau erläutert werden, wie der hochohmige Steg verhindert, dass ein in einer Sensorzelle aufgebrachtes Signal ebenfalls in einer benachbarten Sensorzelle gemessen werden kann. In der Fig. 3a sind die Stoffbahnen 3, 4 und 4' sowie die Sensorzellen S1 und S2 mit dem Zwischenbereich 12 und dem darin befindlichen Steg V12 in der X-Y-Ebene gezeigt. Wie bereits in Fig. 2a gezeigt, hat der Steg V12 in der Y-Richtung ein längeres Ausmaß als die linke bzw. rechte Grenzfläche der Sensorzelle S1 bzw. 52. In Fig. 3b ist ein Schnitt durch die Anordnung der Fig. 3a gezeigt, mit welchem die Ausmaße in der X-Richtung demonstriert werden sollen. Der Einfachheit halber sind die Ausmaße des hochohmigen Steges V12 in der Z-Richtung ebenfalls nicht so groß wie die Ausmaße der Sensorzellen S1 bzw. S2 in derselben Richtung. Es ist jedoch nicht zwingend notwendig, in beiden Dimensionen, d.h., in Y- und Z-Richtung eine Querschnittsflächenverringerung anzustreben. In der Fig. 3b sind des Weiteren zwei schematische Laufwege für Elektronen gezeigt, wobei der Laufweg A direkt die Elektroden 3 und 4 durch die Sensorzelle S1 hindurch verbindet, und der Laufweg B die Elektroden 3 und 4' durch die Sensorzelle S1, den Steg V12 und die Sensorzelle S2 durchläuft. Diese beiden Szenarien sollen als Analogien dafür gelten, dass eine in der Sensorzelle S1 aufgebrachte Kraft gleichzeitig ein Signal zwischen den Elektroden 3 und 4' bzw. 4 hervorruft.

Der Laufweg A entspricht in Fig. 3c der Situation, dass der Schalter 20 geschlossen wird und der veränderte Widerstand der Sensorzelle S1 R1 zwischen den Elektroden 3 und 4 abgegriffen werden kann. Der Laufweg B entspricht der Situation, dass die Elektronen nicht nur durch den Widerstand R1 sondern ebenfalls durch den Widerstand RV des hochohmigen Steges V12 und, zumindest in Teilen, durch den Widerstand R2 der Sensorzelle S2 laufen müssen. Da diese in Reihe geschaltet sind und der Durchgangswiderstand des hochohmigen Steges als sehr groß gesehen werden kann, fällt an diesem eine hohe Spannung Uzb ab, so dass nur noch eine geringere zusätzliche Messspannung an der Elektrode 4' gemessen werden kann. Je kleiner die Querschnittsfläche des hochohmiges Steges V12 gewählt ist, desto größer wird der Widerstand RV und umso geringer wird eine Beeinflussung der an den Elektroden 3 und 4' anliegenden Spannung gegeben.

Für den Fall, dass nicht nur in der Sensorzelle S1, sondern auch in der Sensorzelle S2 eine Belastung aufgebracht wird, so ist aufgrund des vorab Gesagten nahezu auszuschließen, dass die jeweils in den Sensorzellen S1 und S2 gemessene Belastung von der benachbarten Zelle herrührt bzw. die Messung beeinflusst, da diese durch den hochohmigen Widerstand RV voneinander entkoppelt sind.

Selbstverständlich ist es auch möglich, die Taktilsensoren der Fign. 1 und 2 miteinander zu kombinieren, indem einige Sensorzellen zusammenhängend ausgebildet werden und andere völlig von den anderen Sensorzellen beabstandet ausgeführt werden. Dies kann beispielsweise dann geschehen, wenn zu erwarten ist, dass bestimmte Bereiche des Taktilsensors einem größeren Verschleiß als andere Bereiche ausgesetzt sind.

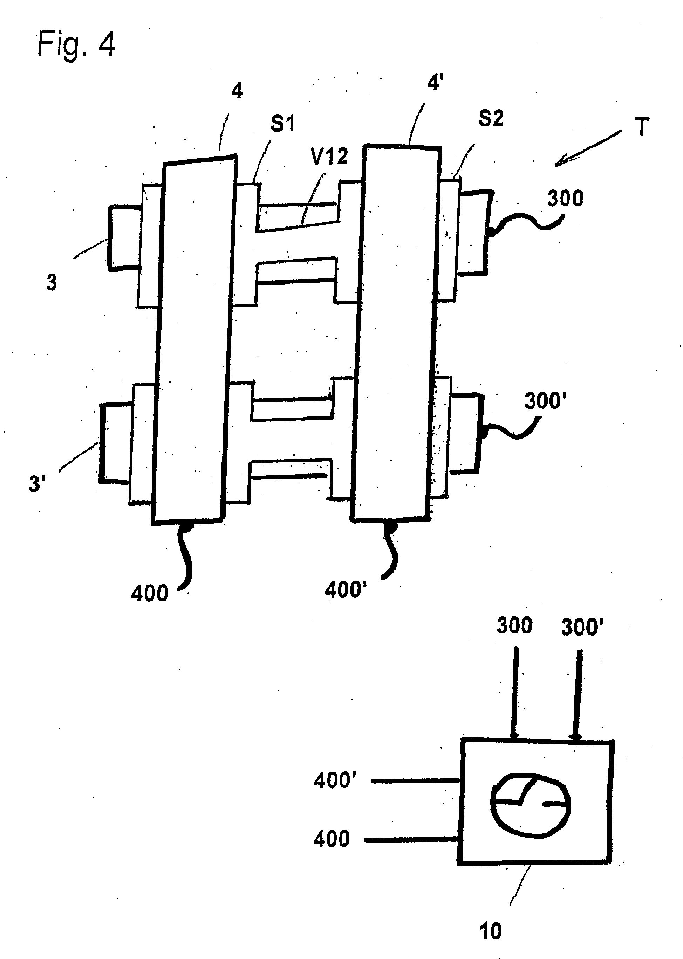

In der Fig. 4 soll noch auf eine Auswerteeinheit eingegangen werden. Der in Fig. 4 dargestellte Taktilsensor T zeigt vier Sensorzellen, welche mit jeweils zwei Elektroden 3, 3' und 4, 4' in Verbindung stehen. Dabei ist jede Elektrode einfach über die Verbindungen 300, 300' bzw. 400, 400' mit einer Auswerteeinheit 10 verbunden. In dieser Auswerteeinheit können entweder per Multiplexerschaltung oder per Hand die verschiedenen Kombinationen der Elektroden durchgeschaltet werden und mit einem Spannungsmessgerät versehen werden, um festzustellen, in welcher Sensorzelle eine Belastung vorhanden ist.

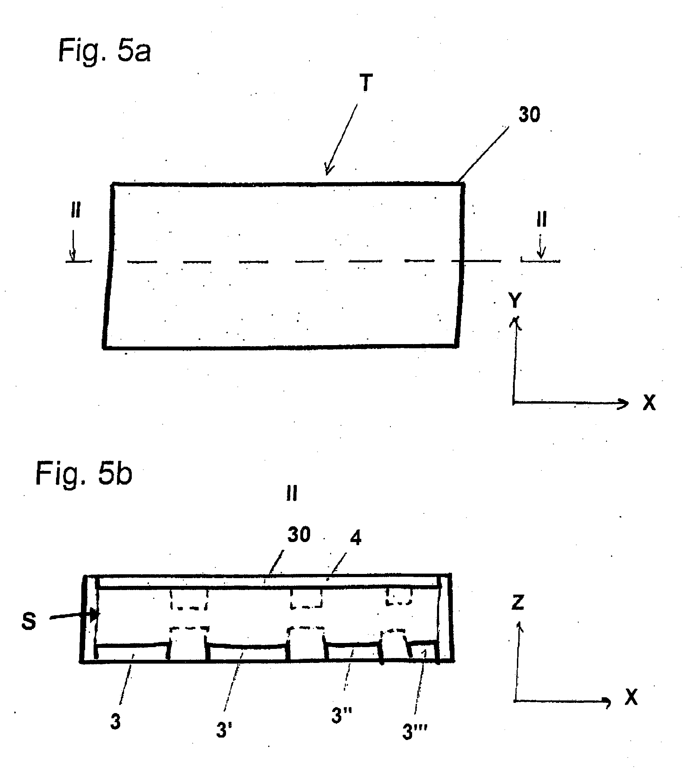

In Fig. 5a ist ein Taktilsensor T mit einer Ummantelung 30 gezeigt. Die Ummantelung kann hierbei sowohl als reine Stoffverkleidung oder aus Plastik oder aus einer Folie angefertigt werden, abhängig davon, wie der Schaumstoffsensor eingesetzt werden soll. Als alternative Materialien für den Schaumstoff bieten sich Silikon, Kautschuk oder andere leitfähige flexible Materialien an.

In der Fig. 5b ist ein Schnitt durch den Taktilsensor T der Fig. 5a gezeigt. Dieser ist im Aufbau dem Taktilsensor der Fign. 2a bis 2c ähnlich. Die Ummantelung 30 kann dabei zusätzlich entlang der hochohmigen Stege vernäht bzw. verschweißt werden, um eine zusätzliche Stabilität und Flexibilität im Bereich der hochohmigen Stege zu bilden.

Die Form der Sensorzellen ist nicht wie in den Ausführungsbeispielen gezeigt an Quadrate gebunden, diese kann auch problemlos aus unregelmäßigen Vierecken, Dreiecken (wobei diese dann drei von einer Sensorzelle abgehende Stege aufweisen könnten), oder Kreisen oder nahezu beliebigen geometrischen Formen bestehen.

Die Größe der Sensorzellen bestimmt die Ortsauflösung der Sensormatte. Vorstellbar sind beispielsweise Kantenlängen zwischen 0,5 und 10 cm, was dementsprechend zu Zellgrößen zwischen 0,25 und 100 cm² zur Folge hat. Mit zunehmender Größe der Sensorzellen nimmt die Kraftauflösung innerhalb der einzelnen Zellen ab. Die Zwischenbereiche können zwischen 0,1 cm und 1 cm, vorzugsweise bis zu 0,5 cm breit sein.

Die hier gezeigten Taktilsensoren sind insbesondere für sicherheitskritische Anwendungen gut geeignet. Bei dem Ausfall einer einzelnen Sensorzelle würde der Widerstand der einzelnen Sensorzelle gegen ∞ gehen ohne dass andere Sensorzellen davon beeinträchtigt werden müssten, Zudem kann die Alterung des Sensors dadurch überwacht werden, da mit zunehmender Betriebszeit die Elastizität des Schaumstoffs abnimmt und der Widerstand somit im unbelasteten Zustand absinkt.

## Patentansprüche

1. Taktilsensor (T) mit mindestens zwei durch einen Zwischenbereich (12) voneinander beabstandeten Sensorzellen (S1-S9), wobei eine Sensorzelle ein elektrisch leitfähiges Werkstück aus flexiblem Material und eine Verbindung mit einer ersten und zweiten Elektrode (3, 3', 3"; 4, 4', 4") umfasst, und das flexible Material unter mechanischer Belastung seinen elektrischen Durchgangswiderstand ändert,
und zwei benachbarte Sensorzellen mit einer gemeinsamen ersten oder zweiten Elektrode verbunden sind und im Zwischenbereich zwischen einer ersten und einer zweiten benachbarten Sensorzelle das elektrisch leitfähige Werkstück der ersten und der zweiten Sensorzelle zumindest teilweise durch ein Medium mit einem größeren spezifischen Widerstand als dem spezifischen Widerstand der elektrisch leitfähigen Werkstücke voneinander getrennt sind,
**dadurch gekennzeichnet, dass** für die mindestens zwei Sensorzellen eine Ummantelung (30) vorgesehen ist, wobei die Ummantelung eine Naht umfasst, welche die erste und/oder zweite Elektrode auf das leitfähige Werkstück aufpresst.

2. Taktilsensor nach Anspruch 1, **dadurch gekennzeichnet, dass** die Naht zur Beabstandung der Sensorzellen in dem Zwischenbereich eingebracht ist.

3. Taktilsensor nach einem der Ansprüche 1 oder 2, **dadurch gekennzeichnet, dass** zwei benachbarte Sensorzellen und der dazwischenliegende Zwischenbereich aus einem gemeinsamen elektrisch leitfähigen Werkstück aus flexiblem Material gebildet sind und der Zwischenbereich vorzugsweise einen Steg (V12, V14) umfasst, wobei der Durchgangswiderstand durch den Steg größer ist als der Durchgangswiderstand des elektrisch leitfähigen Werkstücks zwischen der ersten und zweiten Elektrode jeweils einer der Sensorzellen.

4. Taktilsensor nach einem der vorhergehenden Ansprüche, **dadurch gekennzeichnet, dass** alle Sensorzellen ein gemeinsames elektrisches Werkstück aus flexiblem Material aufweisen.

5. Taktilsensor nach einem der vorhergehenden Ansprüche, **dadurch gekennzeichnet, dass** die erste und die zweite Elektrode einer Sensorzelle auf zwei sich gegenüberliegenden Oberflächen der Sensorzelle angebracht sind.

6. Taktilsensor nach einem der vorhergehenden Ansprüche, **dadurch gekennzeichnet, dass** die ersten Elektroden der Sensorzellen im Wesentlichen in einer ersten Ebene liegen und die zweiten Elektroden der Sensorzellen im Wesentlichen in einer zweiten Ebene liegen und die erste und die zweite Ebene voneinander beabstandet sind.

7. Taktilsensor nach einem der vorhergehenden Ansprüche, **dadurch gekennzeichnet, dass** die erste und/oder zweite Elektrode einen leitfähigen Stoff aufweisen.

8. Taktilsensor nach einem der vorhergehenden Ansprüche, **dadurch gekennzeichnet, dass** die erste und/oder zweite Elektrode auf die Sensorzelle geklebt und/oder gepresst sind.

9. Taktilsensor nach einem der vorhergehenden Ansprüche, **dadurch gekennzeichnet, dass** ein Sensorzellengitter mindestens vier Sensorzellen aufweist, wobei das Sensorzellengitter durch einen ersten und einen zweiten Gittervektor aufgespannt ist, welche in einem Winkel von 60° bis 120°, vorzugsweise von 85° bis 95° zueinander stehen, und die Sensorzellen an den Gitterpunkten liegen und eine erste Gruppe von mindestens zwei ersten Elektroden, wobei die Elektroden der ersten Gruppe in Richtung des ersten Gittervektors mit den Sensorzellen verbunden sind, und eine zweite Gruppe von mindestens zwei zweiten Elektroden aufweist, wobei die Elektroden der zweiten Gruppe in Richtung des zweiten Gittervektors mit den Sensorzellen verbunden sind.

10. Taktilsensor nach einem der vorhergehenden Ansprüche, **dadurch gekennzeichnet, dass** das flexible Material ein elektrisch leitfähiger Schaumstoff ist.

11. Taktilsensor nach einem der vorhergehenden Ansprüche, **dadurch gekennzeichnet, dass** die Ummantelung (30) aus einem Stoff und/oder einer Folie und/oder einem Schaumstoff ist.

12. Taktilsensor nach einem der vorhergehenden Ansprüche, **dadurch gekennzeichnet, dass** die mit den Sensorzellen verbundenen Elektroden mit einer Auswerteeinheit (10) verbunden sind.

13. Taktilsensor nach Anspruch 12, **dadurch gekennzeichnet, dass** die Auswerteeinheit (10) eine Multiplexerschaltung umfasst.

14. Taktilsensor nach einem der vorhergehenden Ansprüche, **dadurch gekennzeichnet, dass** die Ummantelung eine wasserdichte Folie umfasst.

## Claims

1. Tactile sensor (T) with at least two sensor cells (S1 - S9) which are at a spacing from each other by means of an intermediate region (12), wherein a sensor cell comprises an electrically conductive workpiece made of flexible material and a connection to a first and second electrode (3, 3', 3"; 4, 4', 4"), and the flexible material changes its electrical volume resistance under mechanical load,
and two adjacent sensor cells are connected to a common first or second electrode and, in the intermediate region between a first and a second adjacent sensor cell, the electrically conductive workpiece of the first and of the second sensor cell are separated from each other at least partly by a medium with a greater specific resistance than the specific resistance of the electrically conductive workpieces,
***characterised in that**,* for the at least two sensor cells, a covering (30) is provided, the covering comprising a seam which presses the first and/or second electrode onto the conductive workpiece.

2. Tactile sensor according to claim 1, **characterised in that** the seam is introduced for spacing of the sensor cells in the intermediate region.

3. Tactile sensor according to one of the claims 1 or 2, **characterised in that** two adjacent sensor cells and the intermediate region lying therebetween are formed from a common electrically conductive workpiece made of flexible material, and the intermediate region comprises preferably a web (V12, V14), the volume resistance through the web being greater than the volume resistance of the electrically conductive workpiece between the first and second electrode respectively of one of the sensor cells.

4. Tactile sensor according to one of the preceding claims, **characterised in that** all the sensor cells have a common electrical workpiece made of flexible material.

5. Tactile sensor according to one of the preceding claims, **characterised in that** the first and the second electrode of a sensor cell are fitted on two oppositely situated surfaces of the sensor cell.

6. Tactile sensor according to one of the preceding claims, **characterised in that** the first electrodes of the sensor cells are situated essentially in a first plane and the second electrodes of the sensor cells are situated essentially in a second plane and the first and the second plane are at a spacing from each other.

7. Tactile sensor according to one of the preceding claims, **characterised in that** the first and/or second electrode have a conductive material.

8. Tactile sensor according to one of the preceding claims, **characterised in that** the first and/or second electrode are glued and/or pressed onto the sensor cell.

9. Tactile sensor according to one of the preceding claims, **characterised in that** a sensor cell grid has at least four sensor cells, the sensor cell grid being spanned by a first and a second grid vector, which are at an angle of 60° to 120°, preferably of 85° to 95° relative to each other, and the sensor cells being situated on the grid points, and has a first group of at least two first electrodes, the electrodes of the first group being connected to the sensor cells in the direction of the first grid vector, and a second group of at least two second electrodes, the electrodes of the second group being connected to the sensor cells in the direction of the second grid vector.

10. Tactile sensor according to one of the preceding claims, **characterised in that** the flexible material is an electrically conductive foamed material.

11. Tactile sensor according to one of the preceding claims, **characterised in that** the covering (30) is made of a material and/or a foil and/or a foamed material.

12. Tactile sensor according to one of the preceding claims, **characterised in that** the electrodes connected to the sensor cells are connected to an evaluation unit (10).

13. Tactile sensor according to claim 12, **characterised in that** the evaluation unit (10) comprises a multiplexer circuit.

14. Tactile sensor according to one of the preceding claims, **characterised in that** the covering comprises a watertight foil.

## Revendications

1. Capteur tactile (T) comportant au moins deux cellules de détection (S1-S9) séparées l'(es) une(s) de l'(des) autre(s) par un espace intermédiaire (12), où une cellule de détection comporte une pièce conductrice faite d'un matériau flexible et une liaison avec une première et une deuxième électrode (3, 3', 3"; 4, 4', 4"), et où le matériau flexible voit sa résistance électrique varier avec la charge mécanique à laquelle il est soumis,
et où deux cellules de détection voisines sont reliées par une première ou une deuxième électrode commune, et où, dans l'espace intermédiaire séparant une première et une deuxième cellule de détection qui lui est voisine, le matériau conducteur de la première cellule et celui de la seconde sont au moins en partie séparés l'un de l'autre par un milieu matériel **caractérisé par** une résistance spécifique plus élevée que la résistance spécifique des pièces conductrices,
**caractérisé en ce qu'**une gaine (30) est prévue pour les au moins deux cellules de détection où la gaine comprend une couture qui presse la première et/ou la deuxième électrode sur la pièce conductrice.

2. Capteur tactile selon la revendication 1, **caractérisé en ce que** la couture est apposée dans l'espace intermédiaire pour la mis à distance des cellules de détection.

3. Capteur tactile selon l'une des revendications 1 ou 2, **caractérisé en ce que** deux cellules de détection voisines et l'espace intermédiaire sont usinés dans une même pièce conductrice commune faite d'un matériau flexible et l'espace intermédiaire de préférence comprend un segment (V12, V14), où la résistance du segment est plus grande que la résistance de la pièce conductrice entre la première et la deuxième électrode de chacune des cellules de détection.

4. Capteur tactile selon l'une des revendications précédentes, **caractérisé en ce que** toutes les cellules de détection présentent une même pièce conductrice commune faite d'un matériau flexible.

5. Capteur tactile selon l'une des revendications précédentes, **caractérisé en ce que** la première et la seconde électrode d'une cellule de détection sont apposées sur deux faces opposées de la cellule.

6. Capteur tactile selon l'une des revendications précédentes, **caractérisé en ce que** les premières électrodes des cellules de détection se trouvent pour l'essentiel sur un même premier plan, que les deuxièmes électrodes des cellules de détection se trouvent pour l'essentiel sur un même deuxième plan, et que le premier et le deuxième plan sont séparés l'un de l'autre par une certaine distance.

7. Capteur tactile selon l'une des revendications précédentes, **caractérisé en ce que** la première et/ou la deuxième électrode présentent une étoffe conductrice.

8. Capteur tactile selon l'une des revendications précédentes, **caractérisé en ce que** la première et/ou la deuxième électrode sont collées/pressées sur la cellule de détection.

9. Capteur tactile selon l'une des revendications précédentes, **caractérisé en ce qu'**un réseau de cellules de détection comprend au moins quatre cellules de détection, où le réseau de cellules de détection est fixé par un premier et un second vecteur de réseau, qui présentent entre eux un angle de 60° à 120°, préférentiellement entre 85° et 95°, et où les cellules de détection se trouvent aux noeuds du réseau,
et comprend un premier groupe d'au moins deux premières électrodes, où les électrodes du premier groupe sont reliées aux cellules de détection dans la direction du premier vecteur de réseau,
et comprend un deuxième groupe d'au moins deux deuxièmes électrodes, où les électrodes du deuxième groupe sont reliées aux cellules de détection dans la direction du deuxième vecteur de réseau.

10. Capteur tactile selon l'une des revendications précédentes, **caractérisé en ce que** le matériau flexible est une mousse synthétique conductrice.

11. Capteur tactile selon l'une des revendications précédentes, **caractérisé en ce que** la gaine (30) est faite à partir d'une étoffe et/ou d'un film et/ou d'une mousse synthétique.

12. Capteur tactile selon l'une des revendications précédentes, **caractérisé en ce que** les électrodes reliées aux cellules de détection sont couplées à une unité d'évaluation (10).

13. Capteur tactile selon la revendication 12, **caractérisé en ce que** l'unité d'évaluation (10) comprend un circuit multiplexeur.

14. Capteur tactile selon l'une des revendications précédentes, **caractérisé en ce que** la gaine comprend un film imperméable de l'eau.
